(19) **Europäisches Patentamt**
**European Patent Office**
**Office européen des brevets**

(11) **EP 4 686 984 A1**

(12) **EUROPÄISCHE PATENTANMELDUNG**

(43) Veröffentlichungstag:
04.02.2026  Patentblatt 2026/06

(51) Internationale Patentklassifikation (IPC):
*G05B 13/02* *(2006.01)*

(21) Anmeldenummer: 24192643.5

(22) Anmeldetag: 02.08.2024

(52) Gemeinsame Patentklassifikation (CPC):
**G05B 13/027**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft
80333 München (DE)**

(72) Erfinder:
• **Limmer, Steffen
80636 München (DE)**
• **Otte, Clemens
81739 München (DE)**
• **Udluft, Steffen
82223 Eichenau (DE)**

(74) Vertreter: **Siemens Patent Attorneys
Postfach 22 16 34
80506 München (DE)**

(54) **VERFAHREN UND MASCHINENSTEUERUNG ZUM STEUERN EINER MASCHINE**

(57)    Mittels einer Vielzahl von Trainings-Zustandsvektoren (TSV), denen jeweils ein Trainings-Zielwert (TTV) zugeordnet ist, wird ein neuronales Netz (NN) darauf trainiert, dass bei Eingabe eines Trainings-Zustandsvektors (TSV) eine partielle Ableitung (DN) des neuronalen Netzes nach seinen Eingabevariablen (X1,...,XK) den zugeordneten Trainings-Zielwert (TTV) zumindest im Mittel reproduziert. Weiterhin wird eine zeitliche Abfolge von Zustandsvektoren der Maschine (M) erfasst. Für einen jeweiligen Zustandsvektor wird detektiert, welche Vektorelemente (SV1,...,SVK) gültige Zustandswerte der Maschine (M) enthalten, und es werden Teilmengen (S1,...,SM) derjenigen Eingabevariablen generiert, die gültigen Zustandswerten zugeordnet sind. Für die Teilmengen (S1,...,SM) wird jeweils eine partielle Ableitung des trainierten neuronalen Netzes (NN) nach den Eingabevariablen der jeweiligen Teilmenge als Auswertenetz (DN1,...,DNM) bereitgestellt. Die den Eingabevariablen der jeweiligen Teilmenge (S1,...,SM) zugeordneten Zustandswerte werden dann in das Auswertenetz (DN1,...,DNM) eingespeist, wobei die verbleibenden Eingabevariablen auf vorgegebene Extremwerte (L1,...,LK, U1,...,UK) gesetzt werden. Abhängig davon wird durch das Auswertenetz (DN1,...,DNM) ein teilmengenspezifisches Ausgabesignal (AS1L, AS1U) erzeugt. Schließlich wird eine gewichtete Summe über die teilmengenspezifischen Ausgabesignale (AS1L, AS1U,...) ermittelt und als Gesamt-Ausgabesignal (ASG) zum Steuern der Maschine (M) ausgegeben.

FIG 3

EP 4 686 984 A1

**Beschreibung**

Bei der Steuerung komplexer Maschinen, wie z.B. Robotern, Motoren, Fertigungsanlagen, Werkzeugmaschinen, Fräsmaschinen, Gasturbinen, Windturbinen, Kühlanlagen, Heizungsanlagen oder Verbrennungskraftmaschinen werden zunehmend Verfahren des maschinellen Lernens eingesetzt. Mittels derartiger Lernverfahren kann eine Maschinensteuerung anhand von Trainingsdaten darauf trainiert werden, ausgehend von aktuellen Betriebssignalen, Sensorwerten oder anderen Zustandswerten einer Maschine, diejenigen Steuersignale zum Steuern der Maschine zu ermitteln, die spezifisch ein gewünschtes oder optimiertes Verhalten der Maschine bewirken und damit deren Performanz optimieren.

Zum Trainieren einer solchen lernbasierten Maschinensteuerung steht eine Vielzahl bekannter Trainingsverfahren, wie z.B. Verfahren des bestärkenden Lernens zur Verfügung. Ein bestärkendes Lernen wird häufig auch als Reinforcement-Learning bezeichnet.

Bei der Anwendung lernbasierter Maschinensteuerungen ist jedoch häufig nicht sichergestellt, dass die Steueraktionen vorgegebene Grenzwerte oder andere technische Nebenbedingungen in allen Situationen einhalten.

Insbesondere in Fällen in denen Zustandswerte zu steuernde Maschine zeitweise nicht korrekt erfasst, übermittelt, hinterlegt oder vorverarbeitet werden oder aus anderen Gründen fehlen oder ungültig sind, steigt die Wahrscheinlichkeit von suboptimalen oder unerwünschten Steueraktionen. Dies stellt vor allem bei sicherheitskritischen Anwendungen häufig ein Problem dar.

Üblicherweise wird ein zeitweises Fehlen von gültigen Zustandswerten der zu steuernden Maschine durch Einsetzen von Mittelwerten, Medianwerten, besonders häufigen Werten oder Defaultwerten abgemildert. In vielen Fällen können diese Maßnahmen ein Fehlen von gültigen Zustandswerten aber nur unzureichend kompensieren.

Es ist Aufgabe der vorliegenden Erfindung, ein Verfahren sowie eine Maschinensteuerung zum Steuern einer Maschine anzugeben, das robuster gegenüber ungültigen, insbesondere fehlenden Zustandswerten der zu steuernden Maschine ist.

Gelöst wird diese Aufgabe durch ein Verfahren mit den Merkmalen des Patentanspruchs 1, durch eine Maschinensteuerung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Erfindungsgemäß werden zum Steuern einer Maschine Vektorelemente von einen Betriebszustand der Maschine quantifizierenden Zustandsvektoren jeweils einer Eingabevariablen eines künstlichen neuronalen Netzes zugeordnet. Mittels einer Vielzahl von Trainings-Zustandsvektoren, denen jeweils ein Trainings-Zielwert zugeordnet ist, wird das neuronale Netz darauf trainiert, dass bei Eingabe eines Trainings-Zustandsvektors eine partielle Ableitung eines Ausgabesignals des neuronalen Netzes nach den Eingabevariablen den zugeordneten Trainings-Zielwert zumindest im Mittel reproduziert.

Eine solche partielle Ableitung wird häufig auch als partielle Ableitung des neuronalen Netzes bezeichnet, insofern das neuronale Netz als Funktion aufgefasst werden kann, die die Eingabevariablen auf das Ausgabesignal abbildet. Eine partielle Ableitung eines neuronalen Netzes kann demnach wiederum als neuronales Netz aufgefasst werden. Falls das neuronale Netz mehrere Ausgabesignale generiert, können für jedes dieser Ausgabesignale ausgabesignalspezifische partielle Ableitungen auf entsprechende Weise ermittelt werden.

Weiterhin wird eine zeitliche Abfolge von einen jeweiligen aktuellen Betriebszustand der Maschine quantifizierenden Zustandsvektoren fortlaufend erfasst. Für einen jeweiligen Zustandsvektor wird detektiert, welche Vektorelemente gültige Zustandswerte der Maschine enthalten, und es werden Teilmengen derjenigen Eingabevariablen generiert, denen Vektorelemente mit gültigen Zustandswerten zugeordnet sind.

Für die Teilmengen

- wird jeweils eine partielle Ableitung des Ausgabesignals des trainierten neuronalen Netzes nach den Eingabevariablen der jeweiligen Teilmenge als Auswertenetz bereitgestellt,
- werden jeweils die den Eingabevariablen der jeweiligen Teilmenge zugeordneten Vektorelemente in das Auswertenetz eingespeist, wobei die verbleibenden Eingabevariablen auf vorgegebene Extremwerte gesetzt werden, und
- wird jeweils abhängig davon durch das Auswertenetz ein teilmengenspezifisches Ausgabesignal erzeugt.

Ferner wird eine gewichtete Summe über die teilmengenspezifischen Ausgabesignale ermittelt und als Gesamt-Ausgabesignal zum Steuern der Maschine ausgegeben.

Zum Ausführen des erfindungsgemäßen Verfahrens sind eine Maschinensteuerung, ein Computerprogrammprodukt sowie ein vorzugsweise nichtflüchtiges computerlesbares Speichermedium vorgesehen.

Das erfindungsgemäße Verfahren sowie die erfindungsgemäße Maschinensteuerung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Ein Vorteil der Erfindung ist insbesondere darin zu sehen, dass durch die Auswertung mehrerer Teilmengen von gültigen Zustandsvariablen verborgene Korrelationen zwischen den gültigen und den fehlenden Zustandswerten implizit berücksichtigt werden können. In vielen Fällen kann so ein durch ungültige Zustandswerte bedingter Fehler gegenüber einer einfachen Ersetzung durch vorgegebene oder extrapolierte Zustandswerte signifikant verringert werden. Eine Abweichung von einem optimalen Steuerverlauf ist beim erfindungsgemäßen Verfahren häufig um 20%-80% geringer als bei bekannten extrapolationsbasierten Verfahren.

Darüber hinaus kann auf einfache Weise erfasst werden, welche Teilmenge von Eingabevariablen das Ausgabesignal in welcher Weise beeinflusst. Auf diese Weise können besonders steuerungsrelevante Eingabevariablen oder Teilmengen von Eingabevariablen identifiziert werden. Damit kann ein Steuerverhalten der Maschinensteuerung in der Regel besser nachvollzogen und validiert werden, was insbesondere bei sicherheitskritischen Anwendungen von erheblicher Bedeutung ist.

Vorteilhafte Ausführungsformen und Weiterbildungen der Erfindung sind in den abhängigen Ansprüchen angegeben.

Nach einer vorteilhaften Ausführungsform der Erfindung können die partiellen Ableitungen durch automatisches Differenzieren, durch Vorwärtsakkumulation, durch Rückwärtsakkumulation, durch numerische Differentiation und/oder durch Taylorapproximation ermittelt werden. Eine Vorwärtsakkumulation bzw. Rückwärtsakkumulation wird im Kontext des automaischen Differenzierens häufig auch als Vorwärtspropagation bzw. Rückwärtspropagation bezeichnet. Standardverfahren zum automatischen Differenzieren sind beispielsweise auf der Wikipedia-Seite https://en.wikipedia.org/wiki/Automatic_differentiation (abgerufen am 19. Juli 2024) und in dort erwähnten Referenzen beschrieben. Effiziente Implementierungen von Verfahren zum partiellen Ableiten neuronaler Netze sind insbesondere in den Programmbibliotheken TensorFlow oder Google JAX verfügbar.

Nach einer weiteren vorteilhaften Ausführungsform der Erfindung können die Extremwerte für eine jeweilige Eingabevariable eingabevariablenspezifisch in Form eines Minimalwerts und eines Maximalwerts vorgegeben sein. Damit kann für alle Minimalwerte und Maximalwerte der verbleibenden Eingabevariablen jeweils ein teilmengenspezifisches Ausgabesignal erzeugt werden. Wenn die verbleibenden Eingabevariablen als m-dimensionaler Vektor aufgefasst werden, wird das Auswertenetz gewissermaßen für alle Eckpunkte eines m-dimensionalen Quaders, d.h. über $2^m$ Eckpunkte ausgewertet.

Nach einer weiteren vorteilhaften Ausführungsform der Erfindung kann einem jeweiligen Trainings-Zustandswert eine Steuerinformation als Trainings-Zielwert zugeordnet sein. Auf diese Weise kann die partielle Ableitung des neuronalen Netzes auf eine Reproduktion der Steuerinformation trainiert werden. Das Gesamt-Ausgabesignal kann dann als Steuersignal ausgegeben werden.

Weiterhin kann einem jeweiligen Trainings-Zustandswert ein zukünftiger Zustandswert als Trainings-Zielwert zugeordnet sein. Auf diese Weise kann die partielle Ableitung des neuronalen Netzes auf eine Reproduktion des zukünftigen Zustandswertes, d.h. auf einen Prädiktionswert trainiert werden. Das Gesamt-Ausgabesignal kann dann als Prädiktionswert ausgegeben werden. Eine Berücksichtigung prognostizierter Zustandswerte erlaubt in vielen Fällen eine vorausschauende und damit besonders effiziente Steuerung der Maschine.

Darüber hinaus kann einem jeweiligen Trainings-Zustandswert ein Sensorwert als Trainings-Zielwert zugeordnet sein. Damit kann die partielle Ableitung des neuronalen Netzes auf eine Reproduktion des Sensorwerts trainiert werden. Das Gesamt-Ausgabesignal kann dann als virtueller Sensorwert, d.h. als nicht direkt gemessener, sondern berechneter Sensorwert ausgegeben werden. Auf diese Weise kann ein Mess- und Sensoraufwand häufig verringert werden. Insbesondere können Sensorwerte für Positionen berechnet werden, an denen das Anbringen oder Abfragen von Sensoren großen Aufwand erfordert.

Nach einer weiteren vorteilhaften Ausführungsform der Erfindung kann eine gewichtete Summe über eine jeweilige Menge von teilmengenspezifischen Ausgabesignalen rekursiv über gewichtete Summen über teilmengenspezifische Ausgabesignale echter Teilmengen der jeweiligen Menge ermittelt werden.

Insbesondere kann die gewichtete Summe durch Summation über eine Streuungszerlegung für multivariate Funktionen ermittelt werden. Eine solche Streuungszerlegung wird häufig auch als Varianzanalyse oder ANOVA-Zerlegung (ANOVA: Analysis of Variance) bezeichnet. Eine derartige Streuungszerlegung ist in gewisser Weise minimal, insofern die Summanden keine unnötigen Variablen enthalten, d.h. keine Variablen, die nicht schon durch andere Summanden ausgedrückt werden können. Durch diese minimale Zerlegung kann in vielen Fällen ein Rechenaufwand signifikant verringert werden. Darüber hinaus erlaubt eine Streuungszerlegung eine Abschätzung eines durch fehlende Zustandswerte bedingten Fehlers. Effiziente Verfahren zur Anwendung und Summation von Streuungszerlegungen sind z.B. der Publikation "On decompositions of multivariate functions" von F. Kuo, I. Sloan, G. Wasilkowski, and H. Wozniakowski, Math. Comp., vol. 79, no. 270, pp. 953-966, 2010 entnehmbar. Die dort beschriebenen Lösungen erfordern allerdings eine Auswertung mehrdimensionaler Integrale über die zu zerlegende multivariate Funktion. Insofern im Rahmen der vorliegenden Erfindung eine partielle Ableitung des neuronalen Netzes nach seinen Eingabevariablen trainiert wird, können diese Integrale auf einfache Weise mittels partieller Ableitungen des trainierten neuronalen Netzes nach einer Teilmenge der Eingabevariablen ermittelt werden.

Nach einer vorteilhaften Weiterbildung der Erfindung kann eine Liste von Teilmengen der Eingabevariablen eingelesen werden. Damit kann bei der Generierung der Teilmengen eine Generierung von in der Liste enthaltenen Teilmengen unterdrückt werden, oder es kann die gewichtete Summe nur über nicht in der Liste enthaltene Teilmengen erstreckt werden. Auf diese Weise können bei der Generierung des Gesamt-Ausgabesignals bestimmte Teilmengen von Eingabevariablen ausgeschlossen werden, die sich beispielsweise aufgrund sogenannter Scheinkorrelationen in den Daten negativ auf die Steuerung auswirken würden. Derartige Teilmengen können in vielen Fällen anhand von physikalischen Wirkungszusammenhängen oder Expertenwissen ermittelt werden.

Nach einer weiteren vorteilhaften Weiterbildung der Erfindung kann für die Teilmengen jeweils eine teilmengenspezifische statistische Varianz der teilmengenspezifischen Ausgabesignale ermittelt werden. Eine statistische Varianz des Gesamt-Ausgabesignals kann dann als gewichtete Summe über die teilmengenspezifischen statistischen Varianzen ermittelt werden.

Insbesondere können die statistische Varianz des Gesamt-Ausgabesignals und die statistischen Varianzen der teilmengenspezifischen Ausgabesignale zusammen mit gewichteten Summen von teilmengenspezifischen Ausgabesignalen rekursiv ermittelt werden. Anhand der statistischen Varianzen kann eine Zuverlässigkeit der Ausgabesignale zumindest abgeschätzt werden.

Weiterhin kann für die Vektorelemente jeweils ein Shapley-Wert anhand der teilmengenspezifischen Ausgabesignale ermittelt werden. Insbesondere kann der Shapley-Wert auf einfache und effiziente Weise in Form einer gewichteten Summe über die teilmengenspezifischen Ausgabesignale ermittelt werden. Anhand von Shapley-Werten kann eine Sensitivität der Ausgabesingale hinsichtlich der verschiedenen Eingabevariablen abgeschätzt werden, wodurch ein Steuerverhalten der Maschinensteuerung in der Regel besser nachvollzogen und validiert werden kann. Shapley-Werte sind beispielsweise auf der Wikipedia-Seite https://en.wikipedia.org/wiki/Shapley_value (abgerufen am 19. Juli 2024) beschrieben. Weitere Verfahren zur Anwendung und Berechnung von Shapley-Werten können z.B. der Publikation "A unified approach to interpreting model predictions" von Scott M. Lundberg und Su-In Lee in "Advances in neural information processing systems", vol. 30, 2017 entnommen werden. Gegenüber den in der letztgenannten Publikation beschriebenen Berechnungsverfahren erweist sich eine Berechnung von Shapley-Werten mittels gewichteter Summen über die teilmengenspezifischen Ausgabesignale als erheblich effizienter.

Darüber hinaus kann für die Teilmengen jeweils ein Sobol-Index anhand der teilmengenspezifischen Ausgabesignale ermittelt werden. Anhand von Sobol-Indizes kann eine globale Sensitivität der Ausgabesingale hinsichtlich der verschiedenen Teilmengen von Eingabevariablen abgeschätzt werden. Sobol-Indizes sind beispielsweise auf der Wikipedia-Seite https://en.wikipedia.org/wiki/Variance-based_sensitivity_analysis beschrieben.

Ein Ausführungsbeispiel der Erfindung wird nachfolgend anhand der Zeichnung näher erläutert. Dabei veranschaulichen jeweils in schematischer Darstellung:

Figur 1 eine Maschinensteuerung beim Steuern einer Maschine,

Figur 2 ein Training eines neuronalen Netzes der Maschinensteuerung, und

Figur 3 eine Ermittlung eines Steuersignals anhand von potentiell lückenhaften Betriebssignalen der Maschine.

Insofern in verschiedenen Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können

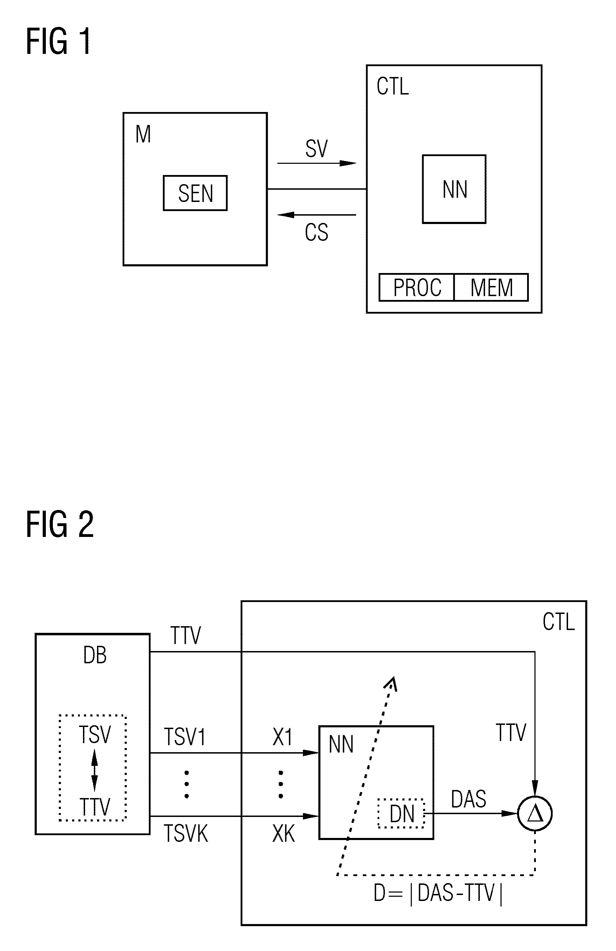

Figur 1 veranschaulicht beispielhaft eine erfindungsgemäße Maschinensteuerung CTL beim Steuern einer Maschine M, die im vorliegenden Ausführungsbeispiel als Roboter, z.B. als Fertigungsroboter ausgestaltet ist. Alternativ oder zusätzlich kann die Maschine M auch ein Motor, eine Fertigungsanlage, eine Fabrik, eine Werkzeugmaschine, eine Fräsmaschine, eine Gasturbine, eine Windturbine, eine Dampfturbine, ein chemischer Reaktor, eine Verbrennungskraftmaschine, eine Kühlanlage oder eine Heizungsanlage sein. Insbesondere kann auch eine Komponente oder ein Teilsystem einer Maschine oder einer Anlage als Maschine M aufgefasst werden.

Die Maschine M ist mit der Maschinensteuerung CTL gekoppelt, die als Teil der Maschine M oder ganz oder teilweise extern zur Maschine M implementiert sein kann. In Figur 1 ist die Maschinensteuerung CTL aus Übersichtlichkeitsgründen extern zur Maschine M dargestellt. Die Maschinensteuerung CTL umfasst einen oder mehrere Prozessoren PROC zum Ausführen der beanspruchten Verfahrensschritte der Maschinensteuerung CTL sowie einen oder mehrere mit dem Prozessor PROC gekoppelte Speicher MEM zum Speichern der von der Maschinensteuerung CTL zu verarbeitenden Daten.

Die Maschine M verfügt über eine Sensorik SEN, die fortlaufend verschiedene aktuelle Betriebsparameter der Maschine M im laufenden Betrieb misst und als Zustandswerte ausgibt. Durch die Zustandswerte können insbesondere physikalische, regelungstechnische, chemische und/oder wirkungstechnische Zustandsgrößen, Sensordaten, Umgebungsdaten oder andere im Betrieb der Maschine M anfallende oder den Betrieb beeinflussende Betriebsparameter quantifiziert werden. Die Zustandsgrößen können dabei eine Temperatur, einen Druck, eine Einstellung, eine Aktorstellung, eine Ventilposition, eine Schadstoffemission, eine Auslastung, einen Ressourcenverbrauch und/oder eine Leistung der Maschine M oder ihrer Komponenten betreffen. Bei einer Fertigungsanlage können die Zustandswerte auch eine Produktqualität oder eine andere Produkteigenschaft betreffen. Bei einer Gasturbine können die Zustandswerte eine Turbinenleistung, eine Rotationsgeschwindigkeit, Vibrationsfrequenzen, Vibrationsamplituden, Verbrennungsdynamiken, Verbrennungswechseldruckamplituden oder Stickoxidkonzentrationen betreffen.

Die von der Sensorik SEN aktuell gemessenen Zustandswerte sowie gegebenenfalls anderweitig ermittelte Zustandswerte der Maschine M werden als Vektorelemente zu einem aktuellen, mehrdimensionalen Zustandsvektor SV zusammengefasst, durch den ein aktueller Betriebszustand der Maschine M quantifiziert wird. Die Vektorelemente eines Zustandsvektors SV können die betreffenden Zustandswerte jeweils durch Gleitkommazahlen, Ganzzahlen oder andere Datenstrukturen quantifizieren.

Durch die fortlaufende Ermittlung der Zustandswerte wird im laufenden Betrieb der Maschine M eine zeitliche Abfolge aktueller Zustandsvektoren SV erzeugt, die fortlaufend von der Maschine M zur Maschinensteuerung CTL übermittelt wird.

Durch die Maschinensteuerung CTL werden aus den einen Betriebszustand der Maschine M quantifizierenden Zustandsvektoren SV Steuersignale CS zum Steuern der Maschine M abgeleitet.

Die Steuersignale CS werden mittels eines künstlichen neuronalen Netzes NN der Maschinensteuerung CTL generiert. Das neuronale Netz kann dabei insbesondere ein rekurrentes neuronales Netz, ein faltendes neuronales Netz, ein Perzeptron, ein bayessches neuronales Netz, einen Autoencoder, einen variationalen Autoencoder und/oder eine Deep-Learning-Architektur umfassen.

Das neuronale Netz NN wird vorab derart trainiert, dass anhand von eingespeisten Zustandsvektoren Ausgabesignale erzeugt werden, mittels derer die Maschine M in optimierter Weise gesteuert werden kann. Zum Training eines solchen neuronalen Netzes NN steht eine Vielzahl effizienter Verfahren des maschinellen Lernens zur Verfügung. Durch das Training des neuronalen Netzes NN wird die Maschinensteuerung CTL zum optimierten Steuern der Maschine M konfiguriert. Ein Ablauf dieses Trainings wird unten näher erläutert.

Zum optimierten Steuern der Maschine M werden durch das trainierte neuronale Netz NN anhand der Zustandsvektoren SV Ausgabesignale, beispielsweise in Form von numerischen Datenvektoren generiert. Die Ausgabesignale oder daraus abgeleitete Signale werden dann als Steuersignale CS von der Maschinensteuerung CTL zur Maschine M übermittelt, um diese in optimierter Weise zu steuern.

Die Maschine M wird gesteuert, indem durch die Steuersignale CS induzierte Steueraktionen durch die Maschine M ausgeführt werden. Auf diese Weise kann z.B. ein Roboter durch entsprechende Steuersingale CS dazu veranlasst werden, eine optimierte Bewegungstrajektorie auszuführen. Analog dazu kann bei einer Gasturbine eine Gaszufuhr, eine Gasverteilung und/oder eine Luftzufuhr durch entsprechende Steuersignale CS eingestellt werden.

Figur 2 veranschaulicht ein Training des neuronalen Netzes NN der Maschinensteuerung CTL. Durch das Training soll das neuronale Netz NN darauf trainiert werden, aus eingespeisten Zustandsvektoren ein oder mehrere Ausgabesignale zu erzeugen, mittels derer die Maschine M in optimierter Weise gesteuert werden kann. Auf Gründen der Übersichtlichkeit wird im Folgenden nur ein einzelnes Ausgabesignal explizit betrachtet.

Es sei angenommen, dass die Zustandsvektoren eine Anzahl von K Vektorelementen umfassen, die jeweils einen Zustandswert der Maschine M quantifizieren. Zur Verarbeitung derartiger Zustandsvektoren der Dimension K weist das neuronale Netz NN eine entsprechende Anzahl von K Eingabevariablen X1,...XK auf. K kann dabei typischerweise einen Wert von ca. 3-15 annehmen.

Unter einem Training sei allgemein eine Optimierung einer Abbildung von Eingabevariablen eines Maschinenlernmoduls, hier des neuronalen Netzes NN, auf ein oder mehrere Ausgabesignale verstanden. Wie oben schon erwähnt, wird im Folgenden aus Gründen der Übersichtlichkeit nur ein einzelnes Ausgabesignal explizit betrachtet. Die Abbildung wird durch einen in der Regel hochdimensionalen Parametervektor $\theta$ parametrisiert. Die Parameter des Parametervektors $\theta$ können dabei insbesondere Gewichte von Verbindungen zwischen Neuronen des neuronalen Netzes NN umfassen und/oder deren Vernetzungsstrukturen spezifizieren. In diesem Sinne kann das neuronale Netz NN als eine durch $\theta$ parametrisierte Funktion NN($\theta$; X1,...,XK) seiner Eingabevariablen X1,...,XK aufgefasst werden, wobei der Funktionswert das Ausgabesignal repräsentiert.

Die vorgenannte Abbildung wird nach vorgegebenen, gelernten und/oder zu lernenden Kriterien während einer Trainingsphase optimiert. Als Kriterien können hierbei z.B. bei Steuermodellen eine Performanz oder ein Erfolg einer Steueraktion, bei Prädiktionsmodellen ein Prädiktionsfehler oder bei Klassifikationsmodellen ein Klassifikationsfehler herangezogen werden. Durch das Training werden die Parameter des Parametervektors $\theta$ so eingestellt bzw. optimiert, dass die vorgegebenen Kriterien zumindest im statistischen Mittel möglichst gut erfüllt werden. Das Training kann somit als Optimierungsproblem aufgefasst werden.

Für derartige Optimierungsprobleme auf dem Gebiet des maschinellen Lernens ist eine Vielzahl von effizienten Optimierungsverfahren verfügbar. Insbesondere können Rückpropagationsverfahren, gradientenbasierte Optimierungsverfahren, gradientenfreie Optimierungsverfahren, populationsbasierte Optimierungsverfahren, Partikelschwarmoptimierungen und/oder genetische Optimierungsverfahren verwendet werden.

Das Training wird anhand einer großen Menge von Trainingsdatensätzen ausgeführt, die im vorliegenden Ausführungsbeispiel in einer an die Maschinensteuerung CTL gekoppelten Datenbank DB gespeichert sind. Die Trainingsdatensätze stammen vorzugsweise von der Maschine M, von einer dazu ähnlichen Maschine und/oder von einer Simulation der Maschine M.

Die Trainingsdatensätze umfassen jeweils einen K-dimensionalen Trainings-Zustandsvektor TSV und einen diesem zugeordneten Trainings-Zielwert TTV. Die Trainings-Zustandsvektoren TSV enthalten jeweils K Vektorelemente TSV1, ..., TSVK, die jeweils einen Zustandswert der Maschine M quantifizieren. Durch einen jeweiligen Trainings-Zustandsvektor TSV werden also die K verschiedenen Zustandswerte und damit ein jeweiliger Betriebszustand der Maschine M quantifiziert.

Die den Trainings-Zustandsvektoren TSV zugeordneten Trainings-Zielwerte TTV sind diejenigen Größen, die bestimmen, worauf das neuronale Netz NN trainiert werden soll.

So kann einem jeweiligen Trainings-Zustandsvektor TSV als Trainings-Zielwert TTV eine Steuerinformation über eine Steueraktion zugeordnet sein, die für den durch diesen Trainings-Zustandsvektor TSV quantifizierten Betriebszustand optimiert ist. Auf diese Weise können mittels des trainierten neuronalen Netzes anhand von eingespeisten Zustandsvektoren optimierte Steueraktionen ermittelt werden, durch die die Maschine M in optimierter Weise gesteuert werden kann.

Alternativ oder zusätzlich kann einem jeweiligen Trainings-Zustandsvektor TSV ein zukünftiger Zustandswert als Trainings-Zielwert TTV zugeordnet sein. Auf diese Weise können mittels des trainierten neuronalen Netzes, anhand von eingespeisten Zustandsvektoren zukünftige Zustandswerte der Maschine M prädiziert werden.

Weiterhin kann einem jeweiligen Trainings-Zustandsvektor TSV ein Sensorwert als Trainings-Zielwert TTV zugeordnet sein. Auf diese Weise können mittels des trainierten neuronalen Netzes, anhand von eingespeisten Zustandsvektoren virtuelle Sensorwerte der Maschine M ermittelt werden.

Für das Training des neuronalen Netzes NN wird eine partielle Ableitung DN des neuronalen Netzes NN nach dessen Eingabevariablen X1,...,XK generiert. Wie oben schon erwähnt, entspricht dies einer partiellen Ableitung des Ausgabesignals des neuronalen Netzes NN nach seinen Eingabevariablen X1,...,XK. Insofern das neuronale Netz NN als durch den Parametervektor θ parametrisierte Funktion seiner Eingabevariablen X1,...,XK aufgefasst wird, ergibt sich die partielle Ableitung zu

$$DN(\theta; X1, ..., XK) \ = \ \frac{d}{dX1} \cdots \frac{d}{dXK} NN(\theta; X1, ..., XK)$$

Es sei darauf hingewiesen, dass die partielle Ableitung DN und das neuronale Netz NN auf demselben Parametervektor θ basieren.

Die partielle Ableitung DN wird vorzugsweise durch automatisches Ableiten generiert. Zu diesem Zweck stehen effiziente Ableitungsverfahren zur Verfügung, beispielsweise in den Programmbibliotheken TensorFlow oder Google JAX. In der letztgenannten Programmbibliothek dann die partielle Ableitung DN auf einfache Weise durch die Methode jax.grad erzeugt werden.

Zum Training des neuronalen Netzes NN werden die Trainings-Zustandsvektoren TSV in die Eingabevariablen X1, ..., XK eingespeist. Dabei wird ein jeweiliges Vektorelement TSV1, TSV2, ... bzw. TSVK eines jeweiligen Trainings-Zustandsvektors TSV der Eingabevariablen X1, X2, ... bzw. XK zugeordnet. D.h. für n = 1, ..., K wird die n-te Eingabevariable Xn auf den Wert des jeweiligen n-ten Vektorelements TSVn gesetzt.

Die Vektorelemente TSV1, TSV2, ..., TSVK werden durch die generierte partielle Ableitung DN in ein Ausgabesignal DAS umgesetzt, das die partielle Ableitung eines entsprechenden Ausgabesignals des neuronalen Netzes NN nach den Eingabevariablen X1, ..., XK repräsentiert.

Durch das Training wird angestrebt, dass die erzeugten Ausgabesignale DAS mit den Trainings-Zielwerten TTV möglichst gut übereinstimmen. Zu diesem Zweck wird eine Abweichung D zwischen den Ausgabesignalen DAS und den Trainings-Zielwerten TTV ermittelt. Die Abweichung D kann hierbei als Reproduktionsfehler aufgefasst werden. Ein solcher Reproduktionsfehler wird im Umfeld des maschinellen Lernens häufig auch als "Loss" bezeichnet. Die Abweichung D kann insbesondere durch einen euklidischen Abstand oder ein Abstandsquadrat zwischen den jeweils darstellenden Vektoren quantifiziert werden, z. B. gemäß $D = (DAS - TTV)^2$.

Die Abweichung D wird, wie in Figur 2 durch einen strichlierten Pfeil angedeutet, zum neuronalen Netz NN zurückgeführt. Anhand der zurückgeführten Abweichung D wird die partielle Ableitung DN und damit das neuronale Netz NN darauf trainiert, die Abweichung D zumindest im Mittel zu minimieren. Wie oben schon erwähnt, stehen zur Minimierung der Abweichung D eine Vielzahl von effizienten Optimierungsverfahren zur Verfügung.

Durch die Minimierung der Abweichung D wird das neuronale Netz NN darauf trainiert, zu einem eingespeisten Zustandsvektor ein Ausgabesignal auszugeben, dessen partielle Ableitung nach den Eingabevariablen X1, ..., XK einen entsprechenden Zielwert möglichst gut prädiziert.

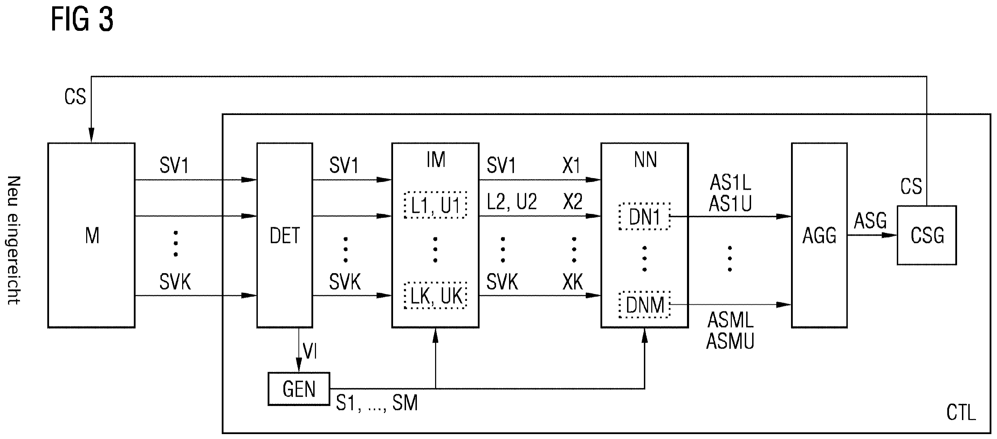

Figur 3 veranschaulicht eine Ermittlung einer Steuersignals anhand von potentiell lückenhaften Betriebssignalen der Maschine M.

Wie oben bereits erwähnt, werden im laufenden Betrieb der Maschine M fortlaufend Zustandsvektoren, die jeweils einen aktuellen Betriebszustand der Maschine M quantifizieren, von der Maschine M zur Maschinensteuerung CTL übermittelt. Die Zustandsvektoren umfassen jeweils eine Anzahl K von Vektorelementen SV1, SV2, ..., SVK, die jeweils einen Betriebsparameter der Maschine M in Form eines Zustandswerts quantifizieren. Ein jeweiliges Vektorelement SV1, SV2, ... bzw. SVK wird dabei der jeweiligen Eingabevariablen X1, X2, ... bzw. XK des neuronalen Netzes NN zugeordnet. Offenbar stellen die in einem jeweiligen Vektorelement SV1, SV2, ... bzw. SVK der Abfolge der Zustandsvektoren enthaltenen Zustandswerte eine Zeitreihe des betreffenden Betriebsparameters dar.

Für das vorliegende Ausführungsbeispiel sei angenommen, dass in einem beispielhaft betrachteten Zustandsvektor das Vektorelement SV2 keinen gültigen Zustandswert enthält, während alle anderen Vektorelemente SV1, SV3, ..., SVK gültige Zustandswerte enthalten.

Die Zustandsvektoren werden in einen Eingabedetektor DET der Maschinensteuerung CTL eingespeist. Der Eingabedetektor DET dient dem Zweck, festzustellen, welche der Vektorelemente SV1, ..., SVK gültige Zustandswerte enthalten und welche nicht. Für den betrachteten Zustandsvektor detektiert der Eingabedetektor DET, dass im Vektorelement SV2 kein gültiger Zustandswert enthalten ist, während alle anderen Vektorelemente SV1, SV3, ..., SVK gültige Zustandswerte enthalten.

Abhängig vom Prüfungsergebnis übermittelt der Eingabedetektor DET eine Gültigkeitsinformation VI zu einem Teilmengen-Generator GEN. Durch die Gültigkeitsinformation VI werden diejenigen Vektorelemente spezifiziert, die gültige Zustandswerte enthalten. Für den betrachteten Zustandsvektor also SV1, SV3, ..., SVK.

Infolgedessen generiert der Teilmengen-Generator GEN abhängig von der Gültigkeitsinformation VI alle Teilmengen S1, ..., SM derjenigen Eingabevariablen, denen Vektorelemente mit gültigen Zustandswerten zugeordnet sind. Für den betrachteten Zustandsvektor also alle Teilmengen der Eingabevariablen X1, X3, ..., XK.

Alternativ kann vorgesehen sein, dass eine im Teilmengen-Generator GEN hinterlegte Liste auszuschließender Teilmengen dazu verwendet wird, eine Generierung von in der Liste enthaltenen Teilmengen der Eingabevariablen X1, ..., XK zu unterdrücken. Auf diese Weise können vorbestimmte Teilmengen, die sich z.B. aufgrund sogenannter Scheinkorrelationen in den Eingabevariablen negativ auf die Steuerung auswirken würden, von der Ermittlung des Steuersignals CS ausgeschlossen werden.

Die Teilmengen S1, ..., SM werden vom Teilmengen-Generator GEN zu einem Eingabe-Belegungsmodul IM der Maschinensteuerung CTL übermittelt. Eine jeweilige Teilmenge kann hierbei insbesondere in Form einer Datenstruktur, z.B. als Liste übermittelt werden, die die einzelnen Elemente der jeweiligen Teilmenge angibt.

Darüber hinaus werden die Vektorelemente SV1, ..., SVK vom Eingabedetektor DET zum Eingabe-Belegungsmodul IM weitergeleitet.

Im Eingabe-Belegungsmodul IM sind für jedes Vektorelement SV1, ... bzw. SVK ein vorgegebener Minimalwert L1, ... bzw. LK sowie ein vorgegebener Maximalwert U1, ... bzw. UK hinterlegt. Optional können die Extremwerte L1, ..., LK, U1, ..., UK auch im Eingabedetektor DET hinterlegt sein, um dort zu prüfen, ob ein jeweiliges Vektorelement in einem gültigen Bereich zwischen dem betreffenden Minimalwert und dem betreffenden Maximalwert liegt. Ein außerhalb dieses Bereiches liegendes Vektorelement kann so auf einfache Weise als ungültig erkannt werden.

Für eine jeweilige generierte Teilmenge Sn, n ∈ {1, ... M}, erzeugt das Eingabe-Belegungsmodul IM mindestens eine teilmengenspezifische Belegung der Eingabevariablen X1, ..., XK. Dabei werden die in der jeweiligen Teilmenge Sn enthaltenen Eingabevariablen auf die in den zugeordneten Vektorelementen enthalten Zustandswerte gesetzt. Es sei darauf hingewiesen, dass jede dieser Zustandswerte ein gültiger Zustandswert ist, da jede der generierten Teilmengen S1, ..., SM eine Teilmenge der Eingabevariablen mit gültigen Zustandswerten ist.

Demgegenüber werden die in der jeweiligen Teilmenge Sn nicht enthaltenen Eingabevariablen auf die jeweils korrespondierenden Extremwerte gesetzt. Dabei wird für jede in der Teilmenge Sn nicht enthaltene Eingabevariable Xi, i ∈ {1, ..., K}, jeweils eine Belegung erzeugt, in der die betreffende Eingabevariable Xi auf den korrespondierenden Minimalwert Li gesetzt ist, sowie eine weitere Belegung, in der die betreffende Eingabevariable Xi auf den korrespondierenden Maximalwert Ui gesetzt ist. Insofern durch das Eingabe-Belegungsmodul IM für jede in der Teilmenge Sn nicht enthaltene Eingabevariable Xi zwei Belegungen der Eingabevariablen X1, ..., XK erzeugt werden, beträgt die Anzahl der für die Teilmenge Sn generierten Belegungen $2^m$, wobei m >= 0 die Anzahl der nicht in der jeweiligen Teilmenge Sn enthaltenen Eingabevariablen bezeichnet. Auf diese Weise werden für jede Teilmenge Sn verschiedene teilmengenspezifische Belegungen für die Eckpunkte eines m-dimensionalen Quaders erzeugt.

Weiterhin werden die generierten Teilmengen S1, ..., SM vom Teilmengen-Generator GEN zum neuronalen Netz NN übermittelt, das wie oben beschrieben trainiert wurde. Parallel dazu werden für jede der Teilmengen S1, ..., SM die korrespondierenden teilmengenspezifischen Belegungen der Eingabevariablen X1, ..., XK vom Eingabe-Belegungsmodul IM in das trainierte neuronale Netz NN eingespeist.

Darüber hinaus wird für jede Teilmenge Sn, n ∈ {1, ... M}, der Teilmengen S1, ..., SM eine partielle Ableitung DNn des trainierten neuronalen Netzes NN nach den Eingabevariablen der betreffenden Teilmenge Sn als Auswertenetz bereitgestellt. Für eine beispielsweise nur die Eingabevariablen X1 und X3 enthaltende Teilmenge Sn ergibt sich so

$$DNn(\theta;\ X1, ..., XK)\ =\ \frac{d}{dX1}\frac{d}{dX3}NN(\theta;\ X1, ..., XK)\ .$$

Offenbar entspricht eine partielle Ableitung eines jeweiligen Auswertenetzes DNn nach den in der jeweiligen Teilmenge Sn nicht enthaltenen Eingabevariablen der partiellen Ableitung des trainierten neuronalen Netzes NN nach allen Eingabevariablen X1, ..., XK.

Insofern das neuronale Netz NN darauf trainiert wurde, dass dessen partielle Ableitung nach allen Eingabevariablen X1, ..., XK den Zielwert reproduziert, repräsentiert ein Ausgabesignal eines jeweiligen Auswertenetzes DNn ein Integral des Zielwerts über die in der jeweiligen Teilmenge Sn nicht enthaltenen Eingabevariablen. Die zu diesen Eingabevariablen korrespondierenden Minimalwerte Li und Maximalwerte Ui definieren dabei die jeweiligen Integrationsgrenzen.

Im Fall von K = 3 ergibt sich beispielsweise für eine die Eingabevariablen X1 und X3, nicht aber die Eingabevariable X2 enthaltende Teilmenge Sn

$$\int f(X1, X2, X3)\, dX2_{\square} = \frac{d}{dX1}\frac{d}{dX3}NN(\theta;\ X1, X2, X3)\ \big|_{X2=L2}^{X2=U2}\ =\ DNn(\theta;\ X1, X2, X3)\ \big|_{X2=L2}^{X2=U2}$$

mit f(X1,X2,X3) als die den Zielwert darstellende Funktion.

Wie oben bereits angedeutet, können die partiellen Ableitungen DN1, ..., DNM auf effiziente Weise durch automatisches Ableiten, z.B. mittels der Methode jax.grad der Programmbibliothek Google JAX generiert werden. Die partiellen Ableitungen DN1, ..., DNM oder Komponenten davon können vorab für alle Teilmengen der Eingabevariablen X1, ..., XK generiert und für die spätere Benutzung gespeichert werden. Insofern sehr effiziente Ableitungsroutinen verfügbar sind, können die partiellen Ableitungen DN1, ..., DNM aber auch bedarfsweise im laufenden Betrieb ermittelt werden.

Für jede Teilmenge Sn, n ∈ {1, ... M}, der zum neuronalen Netz NN übermittelten Teilmengen S1, ..., SM werden die zu dieser Teilmenge Sn korrespondierenden Belegungen in das zu dieser Teilmenge Sn korrespondierende Auswertenetz DNn eingespeist. Infolgedessen generiert das jeweilige teilmengenspezifische Auswertenetz DNn für die korrespondierenden Belegungen jeweils ein teilmengenspezifisches und belegungsspezifisches Ausgabesignal.

Zur Veranschaulichung sei der Fall betrachtet, dass die ursprüngliche Menge derjenigen Eingabevariablen, denen Vektorelemente mit gültigen Zustandswerten zugeordnet sind, als Teilmenge S1 erzeugt wurde. Insofern beim betrachteten Zustandsvektor genau ein Vektorelement, hier SV2, keinen gültigen Zustandswert enthält, werden für die Teilmenge S1 genau zwei Belegungen vom Eingabe-Belegungsmodul IM in das korrespondierende Auswertenetz DN1 eingespeist. Und zwar eine erste Belegung, bei der die Eingabevariable X2 auf den Minimalwert L2 gesetzt ist, und eine zweite Belegung, bei der die Eingabevariable X2 auf den Maximalwert U2 gesetzt ist. Die übrigen Eingabevariablen X1, X3, ..., XK sind bei beiden Belegungen auf die zugeordneten und gültigen Vektorelemente SV1, SV3, ..., SVK gesetzt.

Infolgedessen wird durch das teilmengenspezifische Auswertenetz DN1 für die erste Belegung ein teilmengenspezifisches und belegungsspezifisches Ausgabesignal AS1L erzeugt und für die zweite Belegung ein teilmengenspezifisches und belegungsspezifisches Ausgabesignal AS1U. Wie oben bereits angedeutet, repräsentiert dabei die Differenz AS1U - AS1L ein Integral des Zielwerts über die nicht in der Teilmenge S1 enthaltene Eingabevariable X2 mit den Integrationsgrenzen L2 und U2.

Indem über Eingabevariablen, hier X2, für die kein gültiger Zustandswert aktuell verfügbar ist, integriert wird, kann die Unsicherheit über den ungültigen Zustandswert in einer Weise berücksichtigt werden, durch die ein Prädiktionsfehler des erfindungsgemäßen Verfahrens, insbesondere bei lückenhaften Betriebssignalen wesentlich verringert werden kann.

Die für die Teilmengen Sn, n ∈ {1, ... M} und die korrespondierenden Belegungen generierten, teilmengenspezifischen und belegungsspezifischen Ausgabesignale, hier AS1L, AS1U, ..., werden von dem jeweils korrespondierenden Auswertenetz DNn zu einem Aggregationsmodul AGG der Maschinensteuerung CTL über-mittelt.

Das Aggregationsmodul AGG dient dem Zweck, eine geeignet gewichtete Summe über die empfangenen Ausgabesignale, hier AS1L, AS1U, ..., als Gesamt-Ausgabesignal ASG zu ermitteln.

Die gewichtete Summe wird im vorliegenden Ausführungsbeispiel durch eine Summation über eine sogenannte ANOVA-Zerlegung oder Streuungszerlegung für multivariate Funktionen ermittelt.

Im Rahmen einer ANOVA-Zerlegung wird die zu approximierende, den Zielwert repräsentierende Funktion f(X) mit K Variablen dargestellt als Summe über Funktionen fs(Xs), die nur von einer Teilmenge S der Variablen X1, ..., XK abhängen. Dabei bezeichnet X die Variablen X1, ..., XK und $X_S$ diejenigen der Variablen X1, ..., XK, die in der Teilmenge S enthalten sind. D.h. $f(X) = \sum_{S \subseteq K} f_S(X_S)$ wobei die Menge aller Variablen X1, ..., XK aus Gründen der Übersichtlichkeit ebenfalls mit K bezeichnet wurde.

Eine ANOVA-Zerlegung ist minimal in dem Sinne, dass die Funktionen fs derart bestimmt werden können, dass die Summanden keine Variablen enthalten, die nicht schon durch andere Summanden ausgedrückt werden. Wie oben schon erwähnt, werden zur Ermittlung einer ANOVA-Zerlegung Integrale über die zu zerlegende Funktion f benötigt. Diese Integrale können jedoch durch das trainierte neuronale Netz NN, bzw. durch die partiellen Ableitungen DN1, ..., DNM auf einfache Weise ermittelt werden. In vorliegenden Fall entsprechen die von einem jeweiligen Auswertenetz DNn, n ∈ {1, ... M} für die Teilmenge Sn generierten Ausgabesignale den Funktionen $f_{Sn}(X_{Sn})$.

Mit Hilfe der ANOVA-Zerlegung kann die den Zielwert darstellende Funktion f im Fall von fehlenden oder anderweitig ungültigen Eingabevariablen in einer Weise approximiert werden, bei der ein Prädiktionsfehler gegenüber bekannten Verfahren signifikant verringert wird. Dabei werden nur diejenigen Summanden bzw. Ausgabesignale fs aufsummiert, bei denen die Teilmenge S keine ungültigen Eingabevariablen enthält. Wenn die Menge der Eingabevariablen ohne gültigen Zustandswert mit J bezeichnet wird, kann die Approximation der Funktion f ermittelt werden gemäß

$$\widehat{f_{\backslash J}}(X) = \sum_{S \subseteq K, J \subset K \backslash S} f_S(X_S) \quad .$$

Im vorliegenden Fall wird die vorstehende Summe durch das Aggregationsmodul AGG als Gesamt-Ausgabesignal ASG ermittelt. Die Summe wird vorzugsweise rekursiv gemäß folgendem Pseudocode berechnet:

$$Input: f(X)$$

$$Output: \{f_S(X_S)\}_{S \subseteq K}, \quad und\ optional\ Varianzen\ \sigma^2, \{\sigma_S\}^2_{S \subseteq K}$$

$$f_\emptyset := \int_{X^K} f(X)\ dX1, \dots, dXK; \quad \sigma_\emptyset := 0$$

$$for\ S \subseteq K, S \neq \emptyset\ do$$

$$\qquad f_S(X_S) = \int_{X^{K-|S|}} f(X)\ dX_{K \backslash S} - \sum_{U \subsetneqq S} f_U(x_U)$$

$$\qquad \sigma_S^2 = \int_{X^{|S|}} f_S^2(\boldsymbol{X_S})\ d\boldsymbol{X_S}$$

$$end$$

$$\sigma^2 := \sum_{S \subseteq K} \sigma_S^2$$

Dabei können optional auch teilmengenspezifische statistische Varianzen $\sigma_S^2$ der teilmengenspezifischen Ausgabesignale sowie eine statistische Varianz $\sigma^2$ des Gesamt-Ausgabesignals ASG berechnet werden. Die Integrale werden - wie oben beschrieben - mittels der Auswertenetze DN1, ..., DNM ermittelt.

Zusätzlich kann durch das Aggregationsmodul AGG für ein jeweiliges Vektorelement SVi, i ∈ {1, ... K}, ein sogenannter Shapley-Wert gemäß

$$\phi_i(f) = \sum_{j=1}^{K} \frac{1}{j} \sum_{S \subseteq K: i \in S, \#S = j} f_S(X_S)$$

berechnet werden.

Durch die Nutzung der ANOVA-Summanden fs kann die Berechnung von Shapley-Werten gegenüber anderen bekannten Verfahren erheblich beschleunigt werden. Anhand von Shapley-Werten kann eine Sensitivität der Ausgabesingale hinsichtlich der verschiedenen Eingabevariablen abgeschätzt werden, wodurch ein Steuerverhalten der Maschinensteuerung CTL in der Regel besser nachvollzogen und/oder validiert werden kann.

Weiterhin kann durch das Aggregationsmodul AGG für eine jeweilige Teilmenge Sn, n ∈ {1, ... M}, ein sogenannter Sobol-Index ermittelt werden. Anhand von Sobol-Indizes kann eine globale Sensitivität der Ausgabesingale hinsichtlich der verschiedenen Teilmengen von Eingabevariablen abgeschätzt werden.

Das für einen jeweiligen ggf. lückenhaften Zustandsvektor ermittelte Gesamt-Ausgabesignal ASG. wird vom Aggregationsmodul AGG zu einem Steuersignalgenerator CSG der Maschinensteuerung CTL übermittelt. Der Steuersignalgenerator CSG leitet aus den übermittelten Gesamt-Ausgabesignalen ASG Steuersignale CS zum Steuern der Maschine M ab.

Sofern das neuronale Netz NN anhand von Angaben über optimierte Steueraktionen als Zielwerten trainiert wurde, kann das Gesamt-Ausgabesignal ASG in vielen Fällen direkt als Steuersignal CS ausgegeben werden.

Falls das neuronale Netz NN anhand von zukünftigen Zustandswerten als Zielwerten trainiert wurde, kann das Gesamt-Ausgabesignal ASG als Prädiktionswert für zukünftige Betriebszustände der Maschine M ausgegeben werden. Der Steuersignalgenerator CSG kann derartige Prädiktionswerte dazu verwenden, um Steuersignale CS zu generieren, die auch für zukünftige Betriebszustände der Maschine M vorteilhaft sind.

Sofern das neuronale Netz NN anhand von Sensorwerten als Zielwerten trainiert wurde, kann das Gesamt-Ausgabesignal ASG als virtueller Sensorwert ausgegeben werden, der in vielen Fällen zu einer zustandsspezifischen Optimierung des Steuersignals CS genutzt werden kann.

Die Steuersignale CS werden schließlich, wie oben beschrieben, zur Maschine M übermittelt, um diese in optimierter Weise zu steuern.

**Patentansprüche**

1. Computerimplementiertes Verfahren zum Steuern einer Maschine (M), wobei

   a) Vektorelemente (SV1,...,SVK) von einen Betriebszustand der Maschine quantifizierenden Zustandsvektoren jeweils einer Eingabevariablen (X1,...,XK) eines künstlichen neuronalen Netzes (NN) zugeordnet werden,
   b) mittels einer Vielzahl von Trainings-Zustandsvektoren (TSV), denen jeweils ein Trainings-Zielwert (TTV) zugeordnet ist, das neuronale Netz (NN) darauf trainiert wird, dass bei Eingabe eines Trainings-Zustandsvektors (TSV) eine partielle Ableitung (DN) eines Ausgabesignals des neuronalen Netzes nach den Eingabevariablen (X1,...,XK) den zugeordneten Trainings-Zielwert (TTV) zumindest im Mittel reproduziert,
   c) eine zeitliche Abfolge von einen jeweiligen aktuellen Betriebszustand der Maschine (M) quantifizierenden Zustandsvektoren fortlaufend erfasst wird,
   d) für einen jeweiligen Zustandsvektor

      - detektiert wird, welche Vektorelemente (SV1,...,SVK) gültige Zustandswerte der Maschine enthalten, und
      - Teilmengen (S1,...,SM) derjenigen Eingabevariablen generiert werden, denen Vektorelemente mit gültigen Zustandswerten zugeordnet sind,

   e) für die Teilmengen (S1,...,SM) jeweils

      - eine partielle Ableitung des Ausgabesignals des trainierten neuronalen Netzes (NN) nach den Eingabevariablen der jeweiligen Teilmenge (S1,...,SM) als Auswertenetz (DN1,...,DNM) bereitgestellt wird,
      - die den Eingabevariablen der jeweiligen Teilmenge (S1,...,SM) zugeordneten Vektorelemente in das Auswertenetz (DN1,...,DNM) eingespeist werden, wobei die verbleibenden Eingabevariablen auf vorgegebene Extremwerte (L1,...,LK, U1,...,UK) gesetzt werden, und
      - abhängig davon durch das Auswertenetz(DN1,...,DNM) ein teilmengenspezifisches Ausgabesignal (AS1L, AS1U) erzeugt wird, und

   f) eine gewichtete Summe über die teilmengenspezifischen Ausgabesignale (AS1L, AS1U,...) ermittelt und als Gesamt-Ausgabesignal (ASG) zum Steuern der Maschine (M) ausgegeben wird.

2. Verfahren nach Anspruch 1, **dadurch gekennzeichnet, dass** die partiellen Ableitungen (DN, DN1,...,DNM) durch automatisches Differenzieren, durch Vorwärtsakkumulation, durch Rückwärtsakkumulation, durch numerische Differentiation und/oder durch Taylorapproximation ermittelt werden.

3. Verfahren nach einem der vorhergehenden Ansprüche, **dadurch gekennzeichnet,**

**dass** die Extremwerte (L1,...,LK, U1,...,UK) für eine jeweilige Eingabevariable (X1,...,XK) eingabevariablenspezifisch in Form eines Minimalwerts (L1,...,LK) und eines Maximalwerts (U1,...,UK) vorgegeben sind, und
**dass** für alle Minimalwerte (L1,...,LK) und Maximalwerte (U1,...,UK) der verbleibenden Eingabevariablen jeweils ein teilmengenspezifisches Ausgabesignal erzeugt wird.

4. Verfahren nach einem der vorhergehenden Ansprüche, **dadurch gekennzeichnet,**

    **dass** einem jeweiligen Trainings-Zustandsvektor (TSV) eine Steuerinformation als Trainings-Zielwert (TTV) zugeordnet ist und das Gesamt-Ausgabesignal (ASG) als Steuersignal (CS) ausgegeben wird,
    **dass** einem jeweiligen Trainings-Zustandsvektor (TSV) ein zukünftiger Zustandswert als Trainings-Zielwert (TTV) zugeordnet ist und das Gesamt-Ausgabesignal (ASG) als Prädiktionswert ausgegeben wird, oder
    **dass** einem jeweiligen Trainings-Zustandsvektor (TSV) ein Sensorwert als Trainings-Zielwert (TTV) zugeordnet ist und das Gesamt-Ausgabesignal (ASG) als virtueller Sensorwert ausgegeben wird.

5. Verfahren nach einem der vorhergehenden Ansprüche, **dadurch gekennzeichnet, dass** eine gewichtete Summe über eine jeweilige Menge von teilmengenspezifischen Ausgabesignalen rekursiv über gewichtete Summen über teilmengenspezifische Ausgabesignale echter Teilmengen der jeweiligen Menge ermittelt wird.

6. Verfahren nach einem der vorhergehenden Ansprüche, **dadurch gekennzeichnet,**
    **dass** die gewichtete Summe durch Summation über eine Streuungszerlegung für multivariate Funktionen ermittelt wird.

7. Verfahren nach einem der vorhergehenden Ansprüche, **dadurch gekennzeichnet, dass** eine Liste von Teilmengen der Eingabevariablen (X1,...,XK) eingelesen wird, und dass

    - bei der Generierung der Teilmengen (S1,...,SM) eine Generierung von in der Liste enthaltenen Teilmengen unterdrückt wird, oder
    - die gewichtete Summe nur über nicht in der Liste enthaltene Teilmengen erstreckt wird.

8. Verfahren nach einem der vorhergehenden Ansprüche, **dadurch gekennzeichnet,**

    **dass** für die Teilmengen (S1,...,SM) jeweils eine teilmengenspezifische statistische Varianz der teilmengenspezifischen Ausgabesignale ermittelt wird, und
    **dass** eine statistische Varianz des Gesamt-Ausgabesignals (ASG) als gewichtete Summe über die teilmengenspezifischen statistischen Varianzen ermittelt wird.

9. Verfahren nach einem der vorhergehenden Ansprüche, **dadurch gekennzeichnet, dass** für die Vektorelemente (SV1,...,SVK) jeweils ein Shapley-Wert anhand der teilmengenspezifischen Ausgabesignale ermittelt wird.

10. Verfahren nach einem der vorhergehenden Ansprüche, **dadurch gekennzeichnet, dass** für die Teilmengen (S1,...,SM) jeweils ein Sobol-Index anhand der teilmengenspezifischen Ausgabesignale ermittelt wird.

11. Maschinensteuerung (CTL), eingerichtet zum Ausführen aller Verfahrensschritte eines Verfahrens nach einem der vorhergehenden Ansprüche.

12. Computerprogrammprodukt umfassend Befehle, die bei der Ausführung des Programms durch einen Computer eine Maschinensteuerung nach Anspruch 11 dazu veranlassen, ein Verfahren nach einem der Ansprüche 1 bis 10 auszuführen.

13. Computerlesbares Speichermedium mit einem Computerprogrammprodukt nach Anspruch 12.

## FIG 1

## FIG 2

$$D = |DAS - TTV|$$

FIG 3

Europäisches
Patentamt

European
Patent Office

Office européen
des brevets

## EUROPÄISCHER RECHERCHENBERICHT

Nummer der Anmeldung

EP 24 19 2643

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/052991 A1 (PFLUGL HORST [AT] ET AL) 9. März 2006 (2006-03-09) * das ganze Dokument * ----- | 1-13 | INV. G05B13/02 |
| X | US 2022/244727 A1 (BOJARSKI MARIUSZ [US] ET AL) 4. August 2022 (2022-08-04) * das ganze Dokument * ----- | 1,11-13 | |
| X | EP 0 762 245 B1 (FROESE THOMAS [DE]) 14. Juni 2000 (2000-06-14) * das ganze Dokument * ----- | 1,11-13 | |
| X | US 2023/359154 A1 (SWAZINNA PHILLIP [DE] ET AL) 9. November 2023 (2023-11-09) * das ganze Dokument * ----- | 1,11-13 | |

RECHERCHIERTE
SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 27. Januar 2025 | José Luis Meseguer |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 2643

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2025

| Im Recherchenbericht angeführtes Patentdokument | Datum der Veröffentlichung | Mitglied(er) der Patentfamilie | | Datum der Veröffentlichung |
|---|---|---|---|---|
| US 2006052991 A1 | 09-03-2006 | AT | 7710 U2 | 25-07-2005 |
| | | AT | E434784 T1 | 15-07-2009 |
| | | EP | 1626317 A2 | 15-02-2006 |
| | | US | 2006052991 A1 | 09-03-2006 |
| US 2022244727 A1 | 04-08-2022 | CN | 114841336 A | 02-08-2022 |
| | | DE | 102022101775 A1 | 04-08-2022 |
| | | JP | 2022117916 A | 12-08-2022 |
| | | US | 2022244727 A1 | 04-08-2022 |
| EP 0762245 B1 | 14-06-2000 | AT | E193948 T1 | 15-06-2000 |
| | | DE | 19530049 A1 | 27-02-1997 |
| | | EP | 0762245 A1 | 12-03-1997 |
| US 2023359154 A1 | 09-11-2023 | CN | 117008467 A | 07-11-2023 |
| | | EP | 4273636 A1 | 08-11-2023 |
| | | US | 2023359154 A1 | 09-11-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **F. KUO** ; **I. SLOAN** ; **G. WASILKOWSKI** ; **H. WOZNIAKOWSKI**. On decompositions of multivariate functions. *Math. Comp.*, 2010, vol. 79 (270), 953-966

- **SCOTT M. LUNDBERG** ; **SU-IN LEE**. A unified approach to interpreting model predictions. *Advances in neural information processing systems*, 2017, vol. 30